# FASCICULE DE BREVET EUROPEEN

(11) **EP 4 155 044 B1**
(45) Date de publication et mention de la délivrance du brevet: **20.11.2024**
(21) Numéro de dépôt: 22194847.4
(22) Date de dépôt: 09.09.2022
(51) Int. Cl.: B29C 33/36, B29C 33/40, B29C 39/06

(54) **INSTALLATION POUR LA RÉALISATION EN CONTINU DE COQUILLES CYLINDRIQUES À PROPRIÉTÉS ISOLANTES ET COQUILLES CYLINDRIQUES ASSOCIÉES**
ANLAGE ZUR KONTINUIERLICHEN HERSTELLUNG VON ZYLINDRISCHEN SCHALEN MIT ISOLIERENDEN EIGENSCHAFTEN UND ENTSPRECHENDE ZYLINDRISCHE SCHALEN
INSTALLATION FOR CONTINUOUS PRODUCTION OF CYLINDRICAL SHELLS WITH ISOLATING PROPERTIES AND ASSOCIATED CYLINDRICAL SHELLS

(30) Priorité: 27.09.2021 FR 2110159
(43) Date de publication de la demande: 29.03.2023
(73) Titulaire: Bulbat, 92400 Courbevoie (FR)
(72) Inventeur: BARBIER, Gilles, 31170 Tournefeuille (FR); MARREL, Didier, 69670 Vaugneray (FR)
(74) Mandataire: Cabinet Laurent & Charras

(56) Documents cités:
- EP-A1- 3 112 115
- JP-A- 2006 123 374
- US-A- 3 147 165
- US-A1- 2016 003 397

## Description

### DOMAINE DE L'INVENTION

L'invention appartient au domaine général du bâtiment et de l'industrie, plus spécifiquement, au domaine de l'isolation thermique de conduites ou canalisations à section transversale circulaire. Elle vise notamment une installation plus particulièrement dédiée à la réalisation de coquilles ou demi-coquilles cylindriques à propriétés isolantes et thermiques.

L'invention concerne également de telles coquilles ou demi-coquilles pourvues de propriétés isolantes et thermiques.

### ETAT ANTERIEUR DE LA TECHNIQUE

La mise en oeuvre de coquilles ou demi-coquilles destinées à venir se positionner autour de tuyauteries, a pour but de conserver la température des fluides transitant au sein desdites tuyauteries, et notamment de diminuer les déperditions caloriques. Ces coquilles ou demi-coquilles de forme cylindrique, et donc aptes à épouser la forme de la canalisation ou tuyauterie en question, avec un diamètre interne notamment approprié, sont traditionnellement réalisés en mousse de polyuréthane ou en mousse de polyisocyanurate.

La réalisation de tels coquilles ou demi-coquilles s'effectue traditionnellement à partir de pains de mousse déjà réalisés et donc solidifiés, que l'on vient découper, par exemple à l'aide d'un fil abrasif, afin d'aboutir à la forme souhaitée, typiquement cylindrique, définissant ainsi un diamètre intérieur, adapté au diamètre de la canalisation à protéger, et d'une épaisseur définie selon les classes d'isolation en vigueur et de calculs thermiques
Si les éléments ainsi obtenus présentent et développent les performances d'isolation thermique souhaitées, en revanche, leur réalisation selon le procédé décrit précédemment engendre des chutes relativement importantes résultant des découpes, typiquement entre 25 et 50 % du volume initial des pains, affectant de manière rédhibitoire la quantité de déchets pour l'environnement.

Les documents EP 3 112 115, US 3 147 165, US 2016/003397 et JP 2006 123374 proposent une autre méthode, qui demeurent cependant complexes à mettre en oeuvre.

L'objectif recherché par la présente invention est de proposer une installation permettant de limiter drastiquement ces chutes pour faire tendre leur production à quasiment zéro.

Par ailleurs, l'invention vise également des coquilles ou demi-coquilles à propriétés isolantes et thermiques, immédiatement utilisables par les opérateurs, c'est-à-dire sans nécessiter d'y adjoindre un quelconque élément supplémentaire.

### EXPOSE DE L'INVENTION

A cet effet, l'invention vise une installation pour la réalisation en continu de coquilles ou demi-coquilles cylindriques à propriétés isolantes thermiques. Cette installation comprend :
- un double convoyeur linéaire à progression discrète et à la même vitesse, respectivement :
   ▪ un convoyeur inférieur recevant une pluralité de moules femelles amovibles ;
   ▪ un convoyeur supérieur, situé à l'aplomb du convoyeur inférieur, et recevant une quantité identique de moules mâles amovibles ;

   lesdits moules mâles et femelles étant conformés pour définir entre eux, en position opérationnelle, un volume semi-cylindrique ;
   ledit double convoyeur étant apte à déplacer les moules entre un poste de remplissage dudit volume en éléments aptes à constituer le matériau à propriétés isolantes thermiques des coquilles ou demi-coquilles, et un poste de réception et de récupération des coquilles ou demi-coquilles alors réalisées ;
- une ou plusieurs buses ou un tube d'introduction dans le volume ainsi défini au niveau du poste de remplissage des constituants du polyuréthane ou du polyisocyanurate.

En d'autres termes, l'invention consiste à proposer une installation permettant directement la conformation de coquilles ou demi-coquilles à propriétés isolantes thermiques selon les dimensions souhaitées, en raison de la réaction des constituants respectivement du polyuréthane ou du polyisocyanurate « in situ », sans nécessiter de quelconque découpe ultérieure, autre que celle de la longueur souhaitée desdites coquilles ou demi-coquilles. La longueur desdits convoyeurs, respectivement supérieur et inférieur, et leur vitesse de progression sont telles, que l'on dispose de la durée nécessaire, une fois l'injection des constituants respectifs réalisée, pour permettre leur interaction entre eux (dans le respect des densités souhaitées) en vue de l'expansion de la mousse ainsi réalisée d'une part, puis la solidification de ladite mousse d'autre part, de sorte à obtenir en fin de progression, au niveau du poste dit de réception, le produit souhaité en vue de l'utilisation finale. Ledit produit se présente donc sous la forme de coquilles ou demi-coquilles, sortant en continu de l'installation, et qu'il convient de couper automatiquement en tronçons à la longueur correspondant à celle souhaitée, ou selon les longueurs standards. Ces coquilles ou demi-coquilles alors obtenues, sont directement utilisables, et peuvent simplement être assemblées autour de la canalisation à protéger.

Selon une caractéristique avantageuse de l'invention, les convoyeurs sont chacun constitués de deux voies, respectivement une voie supérieure et une voie inférieure, typiquement constituées chacune de deux rails parallèles, sur lesquels sont susceptibles de progresser les moules respectivement mâles et femelles, ces derniers étant munis à cet effet de galets montés libres en rotation. Les moules sont entraînés sur les rails au moyen de la poussée d'un vérin dans le sens aller, c'est-à-dire dans le sens de progression des moules en direction d'une zone ou poste de réception des coquilles ou demi-coquilles, et d'une chaîne ou d'une courroie pour leur retour en position initiale. Par ailleurs, les rails des extrémités respectives des deux voies, selon une longueur au moins égale à celle des moules, sont mobiles en translation verticale sous l'action d'un vérin, de telle sorte à permettre le changement de voies des moules.

Avantageusement, l'installation comprend également en amont du poste de remplissage un dispositif de positionnement, au fond des moules femelles, d'un revêtement à fonction de pare-vapeur, par exemple à base d'aluminium.

L'installation comprend également en amont du poste de remplissage un dispositif de positionnement d'un revêtement anti-adhérent en contact avec la partie saillante cylindrique du moule mâle.

En raison du caractère amovible des moules, il est possible, au sein de la même installation, de réaliser des séries de coquilles ou demi-coquilles de différentes dimensions, et notamment de réaliser de tels éléments selon les dimensions standards sollicitées par le marché.

Avantageusement, les moules mâles comprennent une empreinte amovible, réversiblement solidarisée à un support proprement dit reçu sur les rails du convoyeur supérieur. Les parties saillantes au moins de l'empreinte, en forme de demi-cylindre, sont avantageusement revêtues d'un film de silicone, voire de polytétrafluoroéthylène (mieux connu sous la marque déposée Teflon^{®}), afin de favoriser l'opération de démoulage.

L'invention concerne également des coquilles ou demi-coquilles à propriétés isolantes thermiques. Ces coquilles ou demi-coquilles sont constituées d'une partie principale en forme de manchon cylindrique droit, c'est-à-dire correspondant au volume compris entre les parois latérales de deux cylindres concentriques de même hauteur, réalisée en une mousse de polyuréthane ou de polyisocyanurate, dont la face externe est revêtue d'un pare-vapeur, et donc la face interne est revêtue d'un film anti-corrosif.

Le pare-vapeur est typiquement constitué d'un complexe dont l'un des constituants est un film d'aluminium. Plus précisément, ce pare-vapeur peut être constitué d'un sandwich constitué d'un film réalisé en fibres de verre, revêtu de part et d'autre d'un film d'aluminium.

Le film anti-corrosif peut être constitué d'un film plastique ou d'une feuille de papier.

### BREVE DESCRIPTION DES FIGURES

La manière dont l'invention peut être réalisée et les avantages qui en découlent ressortiront mieux des exemples de réalisation qui suivent, donnés à titre indicatif et non limitatif, à l'appui des figures annexées.
La figure 1 est une représentation schématique en perspective de l'installation conforme à un premier mode de réalisation de l'invention.
La figure 2 est une vue schématique latérale de ladite installation.
La figure 3 est une représentation schématique vue de face de l'installation de l'invention de la figure 1, plus précisément du poste de remplissage illustrant les deux moules respectivement mâle et femelle en position sur leur voie respective de retour.
La figure 4 est une vue analogue à la figure 3, illustrant l'ascension vertical du moule femelle.
La figure 5 est une vue analogue aux figures 3 et 4 illustrant la descente du moule mâle, afin de définir en coopération avec le moule femelle le volume destiné à recevoir les constituants d'un polyuréthane ou d'un polyisocyanurate.
La figure 6 est une représentation schématique en section d'une variante du moule mâle, représentée en éclaté.
La figure 7 est une vue analogue à la figure 6 illustrant la coopération du moule mâle avec le moule femelle.
La figure 8 est une représentation schématique d'un moule mâle conforme à l'invention.
La figure 9 est une représentation schématique d'un moule femelle conforme à l'invention.
La figure 10 est une vue schématique respectivement vue de face et latérale du dispositif de déplacement vertical des moules, notamment au niveau des postes amont par rapport au poste de remplissage et aval de réception des demi-coquilles.
La figure 11 est une représentation schématique de moyens de réception et de contrôle de l'expansion de la mousse de polyuréthane ou de polyisocyanurate agissant sur les moules mâles.
La figure 12 est une représentation schématique vue de face illustrant les moyens de conformation et de mise en place d'un complexe pare-vapeur au fond du moule femelle.
La figure 13 est une représentation schématique d'une vue en section selon le plan XII - XII de la figure 12.
La figure 14 est une représentation schématique latérale d'un dispositif de blocage du complexe pare-vapeur en bordure du moule femelle, associé au moyen des figures 12 et 13.
La figure 15 est une vue schématique de face du dispositif de blocage de la figure 14.
La figure 16 est une représentation schématique en perspective d'une coquille ouverte obtenue au moyen de l'installation de l'invention.
La figure 17 est une représentation schématique d'une coquille fermée obtenue par rabat sur elle-même de la coquille de la figure 16.
La figure 18 est une vue schématique en section transversale de la coquille de la figure 16.
La figure 19 est une vue schématique en section transversale de la coquille de la figure 17.
La figure 20 est une représentation schématique en perspective de l'installation conforme à un second mode de réalisation de l'invention.
La figure 21 est une vue schématique latérale de l'installation de la figure 20.
Les figures 22, 23 et 24 sont des représentations schématiques de l'installation vue de face, illustrant les phases de positionnement en mode opérationnelle des moules mâle et femelle en vue du remplissage du volume qu'ils définissent entre eux.
La figure 25 est une représentation schématique en vue latérale illustrant les moyens de conformation et de mise en place d'un complexe pare-vapeur au fond du moule femelle de l'installation de la figure 20.
La figure 26 est une représentation schématique d'une vue en section selon le plan XXVI - XXVI de la figure 25.

### DESCRIPTION DETAILLEE DE L'INVENTION

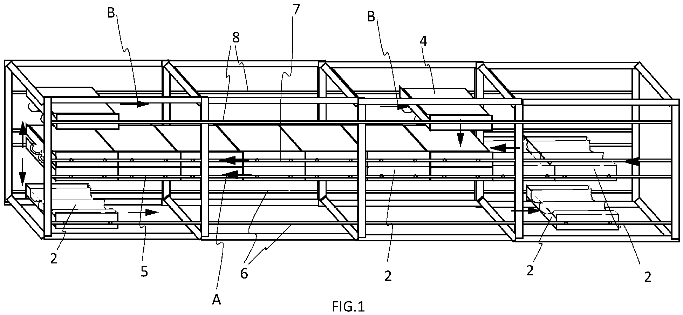

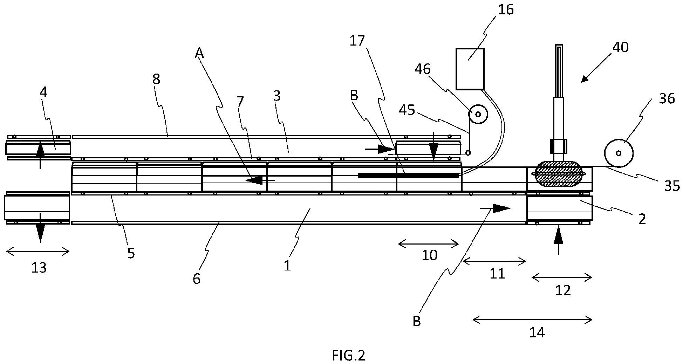

Les figures 1 et 2, comme déjà indiqué, représente une vue schématique de l'installation de l'invention, selon un premier mode de réalisation. En l'espèce, elle est fondamentalement constituée de deux convoyeurs, respectivement un convoyeur inférieur (1) recevant des empreintes (2) de moules femelles, et un convoyeur supérieur (3) recevant des empreintes de moules mâles (4).

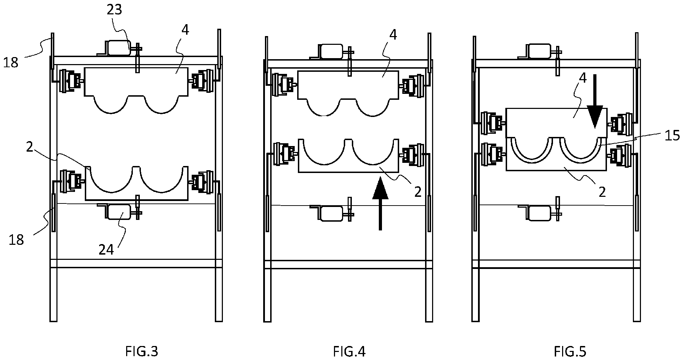

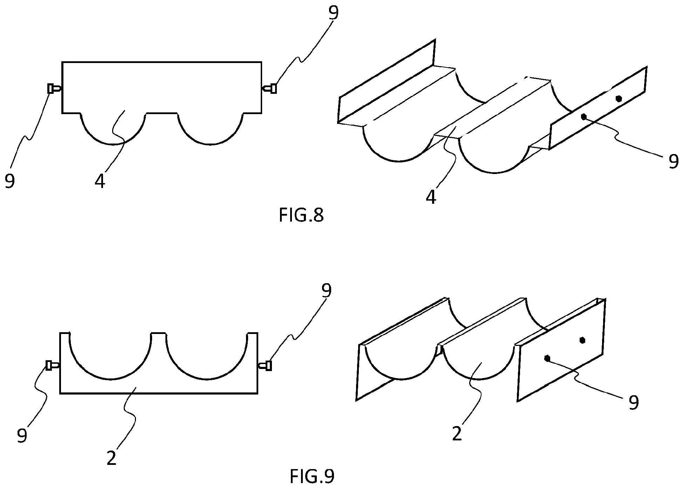

Plus précisément, ces convoyeurs sont chacun constitués de deux paires de rails parallèles, respectivement (5, 6) et (7, 8), sur lesquels sont susceptibles de se déplacer les moules, ces derniers étant à cet effet munis de galets (9) montés fous en rotation, comme on peut mieux le voir sur les figures 3 à 5 ou 8 et 9. Le déplacement effectif des moules le long des rails (5, 7) est assuré selon la flèche A par la poussée d'un vérin (non représenté) prenant appui sur le moule femelle (2) situé le plus à droite sur la figure 2. Corollairement, la progression des moules le long des rails (6, 8) dans le sens retour, c'est-à-dire selon la flèche B est assurée au moyen d'une chaîne ou courroie sans fin, une par convoyeur, dont on a représenté sur les figures 3 à 5 le moteur (23, 24) d'entraînement respectif, et donc dans l'objectif de ramener les moules en leur position initiale.

Les rails, respectivement inférieurs (7) du convoyeur supérieur (3) et supérieurs (5) du convoyeur inférieur (1), parallèles les uns aux autres, sont destinés à permettre la progression des moules, respectivement males (4) et femelles (2) selon la flèche A, c'est-à-dire en direction de la gauche sur les figures 1 et 2. Corollairement, les rails supérieurs (8) du convoyeur supérieur (3) et inférieurs (6) du convoyeur inférieur (1) sont destinés à permettre le rapatriement des moules selon les flèches B sur lesdites figures, en direction respectivement du poste de remplissage (10) pour les moules mâles (4) et du poste amont (14) pour les moules femelles, c'est-à-dire situé en amont du poste de remplissage (10), les notions d'amont et d'aval devant être interprétées par rapport à la direction de progression des moules symbolisée par la flèche A.

Selon cette direction de progression, les moules mâles et femelles coopèrent entre eux, et plus précisément sont en contact partiel l'un avec l'autre afin de définir entre eux un volume (15) de dimensions appropriées, fonction des dimensions des demi-coquilles que l'on souhaite réaliser.

Ce volume (15) est destiné à recevoir les constituants d'un polyuréthane ou d'un polyisocyanurate au niveau du poste de remplissage (10), lesdits constituants, et par exemple un polyol et un isocyanate étant introduits à partir d'une tête de mélange (16) au moyen d'un tube (17) introduit au sein dudit volume (15). Typiquement, ledit tube (17) est relativement profondément introduit dans ledit volume (15) jusqu'à avoisiner l'extrémité aval dudit volume au voisinage de la jonction entre deux moules consécutifs, de telle sorte à s'assurer d'un remplissage correct de ce dernier en mélange polyol et isocyanate, et corollairement, une expansion suffisante du produit résultant de ce mélange pour combler l'intégralité dudit volume.

De manière connue, lorsque ces constituants entrent en contact, ils interagissent entre eux de manière exothermique, et génère une mousse, typiquement un polyuréthane qui s'expanse, mais dont l'expansion est limitée par ledit volume (15). La température résultant de cette interaction diminue au fur et à mesure de la progression des moules selon la direction A, jusqu'à atteindre une température permettant la solidification et la manipulation des demi-coquilles alors obtenues au niveau du poste de réception (13).

Au niveau dudit poste de réception (13), les moules mâle et femelle subissent respectivement une ascension et une descente verticales pour, d'une part, permettre la libération des demi-coquilles sortant alors en mode continu de l'installation, et qui peuvent alors être découpées à longueur souhaitée par tout moyen approprié tel qu'une scie, selon les dimensions standards sollicitées par le marché et à l'opérateur de récupérer les demi-coquilles (si moules à deux empreintes), et d'autre part, positionner lesdits moules au niveau des rails (6, 8) de retour au niveau amont de l'installation, et ainsi redémarrer un cycle.

Plus précisément, les moules mâles stoppent leur retour à l'aplomb du poste de remplissage (10). En revanche, les moules femelles poursuivent leur retour jusqu'à un poste amont (14), lui-même avantageusement constitué de deux sous-postes, respectivement (12) de positionnement d'un film ou complexe à fonction pare-vapeur, typiquement à base d'aluminium au fond des empreintes femelles, et (11) au niveau duquel intervient le commencement de l'introduction du tube (17) des constituants de la mousse polyuréthane ou polyisocyanurate.

Le déplacement vertical relatif des moules mâles et femelles aux deux extrémités des convoyeurs est assuré au moyen de vérins (18), pneumatiques dans l'exemple décrit, mais qui pourraient fonctionner électriquement ou hydrauliquement, illustrés au sein des figures 3 à 5 et 10. Plus précisément, au niveau des postes (10), (12) et (13), les rails (5 - 8) sont dans les faits constitués de sections de rails (19), indépendantes desdits rails (5 - 8) afin de permettre le mouvement des moules tant mâles que femelles au niveau desdits postes selon un mouvement ascendant ou descendant. A cet effet, la tige (21) des vérins (18) est solidaire d'un support (22) desdites sections de rail, ledit support (22) étant susceptible de coulisser verticalement le long d'une tige de guidage (20).

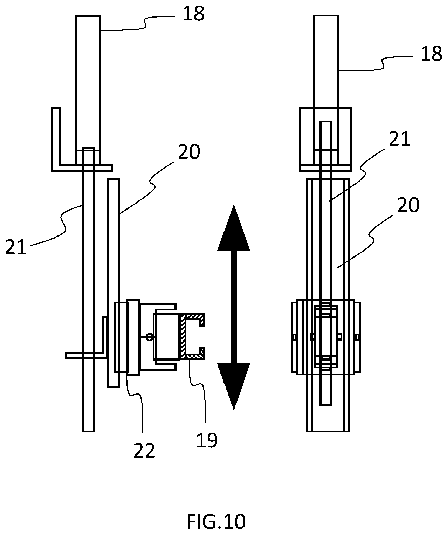

Idéalement, les rails de réception des galets (9) des moules en question, sont conformés pour permettre un guidage effectif desdits galets. En l'espèce, la vue en section dudit rail (19) sur la figure 10 illustre la forme des rails, au moins sur l'un des côtés des convoyeurs, l'autre côté pouvant simplement être constituée d'une cornière, par exemple métallique.

On a illustré le déplacement vertical respectif des moules mâles et femelles au niveau des figures 3 à 5. Plus précisément, la figure 3 illustre un moule femelle (2) et un moule mâle (4) positionnés, soit au niveau du poste de réception, soit au niveau du poste de remplissage. Ils sont donc, à ce niveau, écartés l'un de l'autre.

La figure 4 illustre l'ascension verticale du moule femelle (2) au niveau du rail supérieur (5) du convoyeur inférieur (1). La figure 5 illustre l'abaissement ou la descente verticale du moule mâle (4) au niveau du rail inférieur (7) du convoyeur supérieur (3), de telle sorte à définir le volume semi-cylindrique (15) évoqué précédemment.

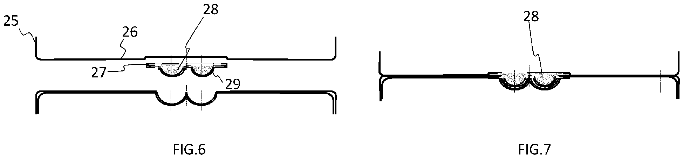

On a représenté au sein des figures 6 et 7 un autre mode de réalisation des moules mâles. Plus précisément, le moule mâle est constitué d'un support (25), muni des galets (non représentés sur les figures 6 et 7), et définissant une emprise ou dégagement (26) destinée à recevoir une empreinte (27) amovible. La fixation de l'empreinte sur le support peut être réalisée par exemple au moyen de pions de centrage (non représentés) s'étendant depuis l'emprise (26) et coopérant avec des orifices correspondants ménagés sur l'empreinte (27). Puis la solidarisation effective peut être réalisée au moyen de vis papillon.

Dans cet exemple de réalisation, le coeur (28) de l'empreinte (27) est réalisée en un matériau dur et rigide, tel que par exemple du bois. Ce coeur est revêtu d'une couche de silicone (29) ou de polytétrafluoroéthylène, et de manière générale, de tout matériau à coefficient de frottement très faible susceptible de résister à l'élévation de température résultant de la constitution de la mousse. Ce faisant, en fin de convoyeur, c'est-à-dire au niveau du poste de réception (13), la coque ou demi-coque peut être découpée, par exemple automatiquement en tronçons selon les dimensions standards sollicitées par le marché, puis démoulée.

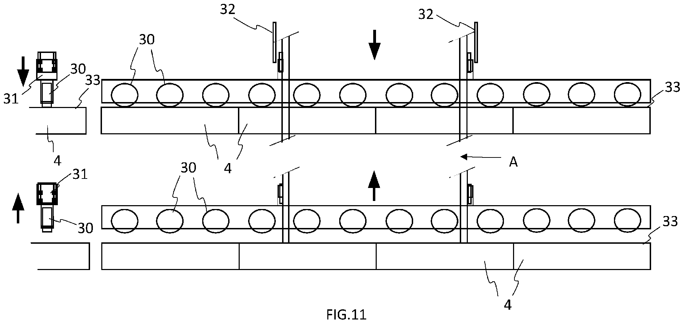

En raison de l'expansion de ladite mousse au fur et à mesure de la progression des moules le long du convoyeur, il peut s'avérer nécessaire de reprendre la pression exercée sur les moules mâles par ladite mousse, voire même sur les moules femelles. A cet effet, et comme illustré sur la figure 11, l'installation comprend avantageusement des galets de reprise (30), montés sur un support (31), ce dernier étant actionnable selon un mouvement vertical au moyen d'un ou de plusieurs vérins (32). Ces galets de reprise (30), montés fous en rotation, sont alignés selon la direction A, et prennent appui sur la face supérieure (33) des moules mâles sensiblement en position centrale par rapport aux bords latéraux desdits moules. Un système équivalent peut être mise en place de manière symétrique au contact des moules femelles, et donc au contact de leur surface inférieure, si la pression générée par la réaction entre les constituants de la mousse polyuréthane ou polyisocyanurate est trop élevée.

Comme évoqué précédemment, un complexe ou film pare-vapeur (35) est avantageusement positionné au fond des moules femelles (2) avant injection des constituants de la mousse dans le volume (15), et donc typiquement au niveau du poste (12). Ce complexe est par exemple une structure sandwich emprisonnant entre deux films d'aluminium, d'épaisseur typique voisine de 12 micromètres, une couche à base de grille de verre et d'aluminium, de polyéthylène, d'épaisseur typique voisine de 23 micromètres.

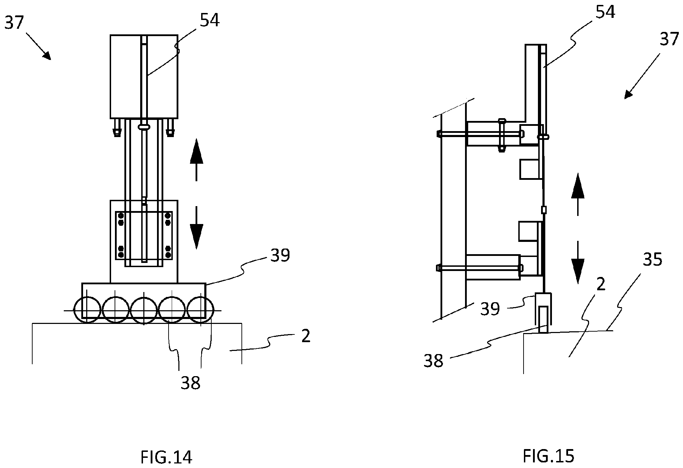

A cet effet, le film ou complexe pare-vapeur (35), stocké sous forme de bobine (36), est déroulé, puis amené à l'aplomb dudit moule femelle au niveau du poste (12). Un dispositif (37), illustré plus en détail au sein des figures 14 et 15, est alors actionné, afin de bloquer ledit film (35) le long de la bordure latérale dudit moule femelle (2). Ce dispositif (37) est par exemple constitué d'une série de galets (38) montés fous en rotation sur un support (39) et selon une même droite horizontale, ledit support étant susceptible d'être animé d'un mouvement vertical de montée et de descente au moyen d'un vérin (54).

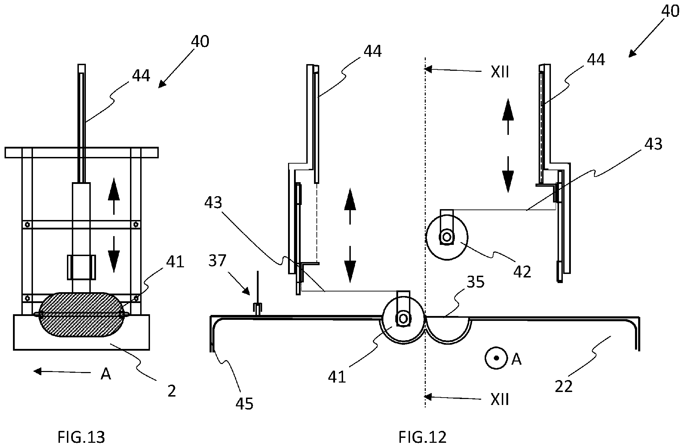

Lorsque le dispositif de blocage du film (37) est activé, c'est-à-dire lorsque les galets (38) bloquent le film, un autre dispositif (40), davantage décrit en lien avec les figures 12 et 13, est alors actionné. Ce dispositif est constitué de deux éléments en volume (41) et (42), de section transversale circulaire, dont le diamètre externe correspondant sensiblement au diamètre interne des empreintes femelles dudit moule (2). Ces éléments en volume (41, 42) subissent l'un après l'autre un mouvement vertical descendant, de sorte à plaquer le film pare-vapeur (35) contre la paroi interne des empreintes femelles, au moyen d'un vérin (44), dont la tige est solidaire d'un support (43) desdits éléments en volume (41, 42).

Plus précisément, l'élément en volume (41) le plus proche de la bordure latérale au niveau de laquelle le film (35) est bloqué par le dispositif de blocage (37) descend en premier (partie gauche de la figure 12). Puis le second élément en volume (42) descend à son tour, ledit premier élément (41) demeurant en position basse, afin de s'assurer du bon placage du film (35) contre l'intégralité de la paroi interne de l'empreinte femelle.

Le complexe pare-vapeur (35), en raison de sa nature, conserve la forme qui lui a été donnée au poste (12) et est plaqué contre le fond dudit moule femelle le temps du processus en raison de la pression exercée par l'expansion de la mousse (polyuréthane ou polyisocyanurate). Corollairement, la progression des moules (sens A) au sein de l'installation entraine la traction dudit complexe pare-vapeur (35) de la bobine (36). Ladite mousse en cours d'expansion vient adhérer au complexe pare-vapeur (35) Ce faisant, adhérant aux demi-coquilles, notamment au poste de réception (13), il est découpé simultanément avec ces dernières.

Par ailleurs, nonobstant la présence de silicone ou de Teflon^{®} sur les parties en saillie du moule mâle (4), il peut être avantageux de munir ces parties saillantes d'un film en un matériau anti-corrosif, et par exemple en un film plastique ou en papier, par exemple d'une épaisseur voisine de 30 micromètres. Un tel film ou papier (45) est déroulé depuis une bobine (46) sensiblement lorsque les moules mâles et femelles sont positionnés au niveau du poste de remplissage (10). Typiquement, ce film (45) est mis en place manuellement au niveau du sous-poste (11). Comme il se retrouve coincé entre les moules mâles et femelles, il avance simultanément avec lesdits moules (sens A) au sein de l'installation, ce qui entraine son déroulement hors de la bobine (46). Par ailleurs, comme pour le complexe pare-vapeur, la mousse en s'expansant vient adhérer contre ce film anti-corrosif (45), en au niveau du poste de réception (13), ledit film se retrouve au niveau du demi-cylindre interne des demi-coquilles.

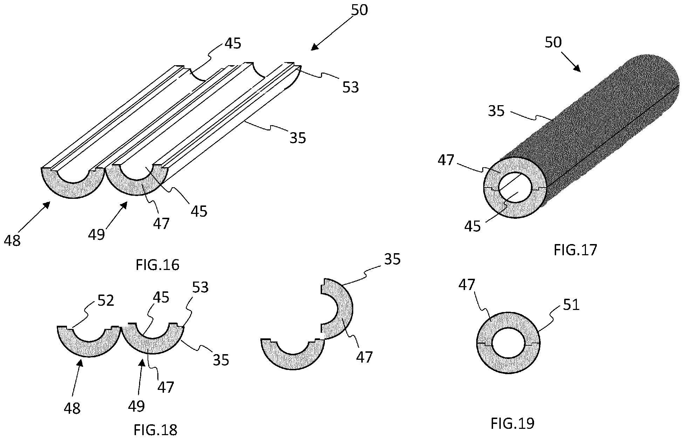

On obtient ainsi les demi-coquilles (50) du type de celle illustrée sur les figures 16 et 18.

Ces demi-coquilles sont donc constituées d'une âme centrale (47) en mousse de polyuréthane ou de polyisocyanurate, revêtue à l'extérieur d'un complexe pare-vapeur (35), et présentant à l'intérieur un film anti-corrosif (45). Typiquement, l'épaisseur de l'âme centrale est standardisée, et peut présenter les valeurs suivantes : 30, 40 ou 50 millimètres, selon les demandes standards.

Plus précisément, on obtient deux demi-coquilles (48, 49), solidarisées l'une à l'autre par le complexe pare-vapeur (35). En refermant les demi-coquilles l'une sur l'autre, par exemple autour de la tubulure ou de la canalisation à protéger, et en solidarisant le bord libre desdites demi-coquilles non solidarisées l'une à l'autre par le complexe pare-vapeur (35), par exemple au moyen d'un film adhésif (51), on positionne alors efficacement la coquille en résultant, permettant à cette dernière la fonction isolante thermique qui lui est dévolue. Ce positionnement peut en outre être optimisé par la réalisation de découpes antagonistes et complémentaires (52) et (53) ménagées sur lesdits bords libres, destinées à coopérer entre elles, lesdites découpes pouvant résulter de moulage au sein de l'installation décrite précédemment.

Dans ce premier mode de réalisation de l'installation selon l'invention, les empreintes de moule sont orientées selon la direction de progression A desdits moules.

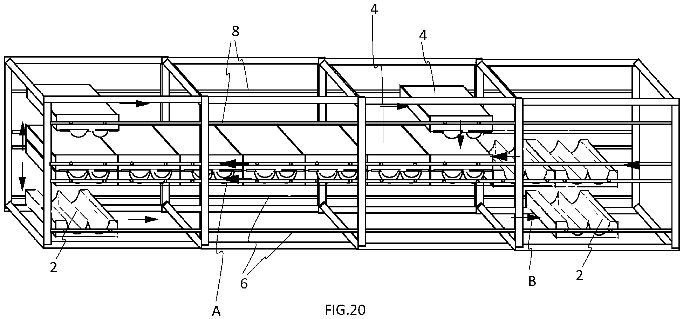

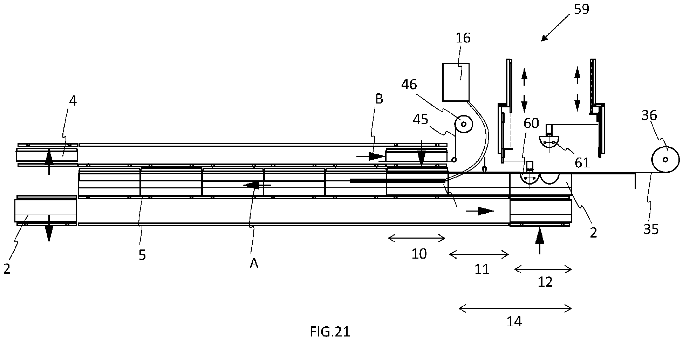

Selon un second mode de réalisation de l'invention, tel qu'illustré en relation avec les figures 20 à 26, les empreintes des moules femelles (2) sont orientées perpendiculairement par rapport à ladite direction de progression. Corollairement, l'orientation des moules mâles (4) est également perpendiculaire par rapport à cette direction de progression A. Le principe général de fonctionnement demeure identique à celui précédemment décrit en lien avec les figures 1 à 12.

Cependant, en raison de ce changement d'orientation des empreintes, qu'il s'agisse des empreintes mâles ou femelles, certains postes voient leur configuration modifiée.

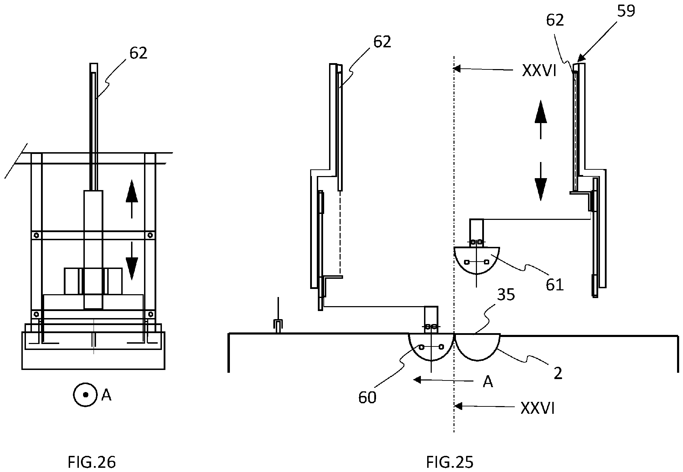

Plus précisément, au niveau du poste (12) de positionnement du film ou complexe à fonction pare-vapeur (35), un dispositif (59) similaire au dispositif (40) du premier mode de réalisation, et illustré plus en détail au sein des figures 25 et 26, comprend deux éléments en volume, en l'espèce (60) et (61), assurant la même fonction que les éléments (41, 42) mentionnés précédemment. Ces éléments (60, 61) sont également orientés perpendiculairement par rapport au sens de progression des moules, et ce, afin de pouvoir coopérer avec les empreintes femelles. Ils sont abaissés l'un après l'autre au moyen d'un vérin (62), après blocage du film (35) en amont, puis abaissement de l'élément (60), puis de l'élément (61).

Par ailleurs, en raison de l'orientation différente des empreintes, il convient d'obturer les faces latérales de ces dernières pour contenir la mousse en cours d'expansion. A cet effet, des joues latérales (65) sont mises en place de part et d'autre de l'empreinte femelle, et notamment fixées à ce niveau au moyen d'équerres ou tout système équivalent, pour ainsi définir le volume (15) lors de l'abaissement du l'empreinte mâle. La face des joues destinées à venir en contact avec la mousse de polyuréthane ou de polyisocyanurate est avantageusement revêtue de silicone ou d'un matériau peu adhésif, afin de favoriser le démoulage en fin de progression des moules dans l'installation.

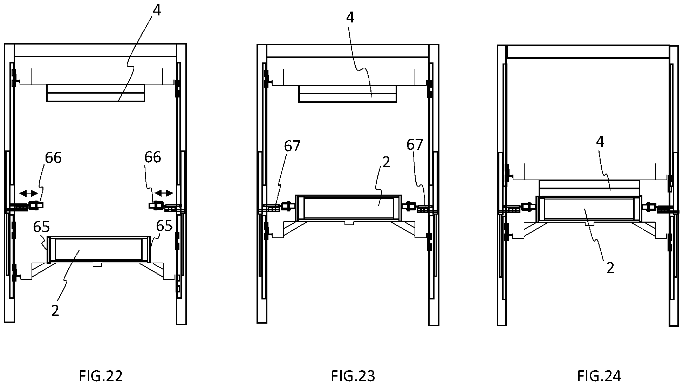

Ainsi, en figure 22, on observe le moule muni de l'empreinte femelle (2) après retour au niveau du poste (12), et donc positionné à son niveau inférieur. Corollairement, le moule mâle (4) est toujours positionné à son niveau supérieur.

Le moule (2) subit alors une ascension (cf. premier mode de réalisation), et des galets libres en rotation (66) viennent alors prendre appui contre les joues (65) à l'aide d'un vérin (67) à débattement horizontal (figure 23), afin d'assurer la reprise de la pression engendrée par l'expansion de la mousse.

Le moule femelle progresse selon la direction A jusqu'au poste (10), au niveau duquel le moule mâle (4) est abaissé, afin de coopérer avec le moule femelle (2) et ainsi définir le volume (15). L'injection des constituants du polyuréthane ou du polyisocyanurate peut alors être réalisée, et le processus suivre son cours, à l'instar de ce qui a été décrit avec le premier mode de réalisation de l'invention.

L'injection desdits constituants peut être réalisée à l'aide d'une seule buse, parcourant linéairement et selon une direction perpendiculaire à la direction A l'empreinte amont et la remplir, et suite à la progression en mode discret du moule femelle, revenir selon le sens inverse pour remplir l'empreinte aval.

On conçoit, qu'en raison du caractère amovible des moules, il est possible, au sein de la même installation, de réaliser des séries de coquilles ou demi-coquilles de différentes dimensions, et notamment de réaliser de tels éléments selon les dimensions standards sollicitées par le marché.

Par ailleurs, le fonctionnement de l'installation de l'invention est telle, qu'outre l'automatisation poussée de la réalisation des coquilles ou demi-coquilles, la cadence de production est significativement élevée, puisqu'aussi bien, il est possible de produite une telle coquille ou demi-coquille toutes les 20 secondes.

## Revendications

1. Installation pour la réalisation en continu de coquilles ou demi-coquilles cylindriques (50) à propriétés isolantes thermiques, comprenant :
• un double convoyeur linéaire à progression discrète selon la même direction et la même vitesse respectivement :
▪ un convoyeur inférieur (1) recevant une pluralité de moules femelles amovibles (2) ;
▪ un convoyeur supérieur (3), situé à l'aplomb du convoyeur inférieur (1), et recevant une quantité identique de moules mâles amovibles (4) ;
lesdits moules mâles et femelles étant conformés pour définir entre eux, en position opérationnelle, un volume semi-cylindrique (15) ;
ledit double convoyeur étant apte à déplacer les moules entre un poste de remplissage (10) dudit volume (15) en éléments aptes à constituer le matériau à propriétés isolantes thermiques des coquilles ou demi-coquilles, et un poste de réception et de récupération (13) des coquilles ou demi-coquilles ;
• au moins un tube (17) ou une buse d'introduction dans le volume (15) ainsi défini au niveau du poste de remplissage (10) des constituants aptes à interagir entre eux afin de constituer un polyuréthane ou un polyisocyanurate.

2. Installation pour la réalisation en continu de demi-coquilles ou coquilles cylindriques à propriétés isolantes thermiques selon la revendication 1, ***caractérisée* en ce que** les convoyeurs inférieur (1) et supérieur (3) sont chacun constitués de deux voies, respectivement une voie supérieure et une voie inférieure, sur lesquelles sont susceptibles de progresser les moules respectivement mâles et femelles, lesdits moules étant entraînés sur les voies au moyen notamment d'un vérin dans le sens de progression des moules entre le poste de remplissage (10) et un poste de réception (13) des coquilles ou demi-coquilles, et au moyen d'une chaîne ou d'une courroie dans le sens retour.

3. Installation pour la réalisation en continu de coquilles ou demi-coquilles cylindriques à propriétés isolantes thermiques selon la revendication 2, ***caractérisée* en ce que** les deux extrémités des deux voies respectives d'une longueur au moins égale à celle des moules, sont mobiles en translation verticale sous l'action d'un vérin (18), de telle sorte à permettre auxdits moules le changement de voies.

4. Installation pour la réalisation en continu de coquilles ou demi-coquilles cylindriques à propriétés isolantes thermiques selon l'une des revendications 2 et 3, ***caractérisée* en ce que** les voies respectivement supérieures et inférieures sont constitués de rails (5 - 8) parallèles entre eux, sur lesquels progressent les moules, ces derniers étant munis à cet effet de galets (9) montés libres en rotation.

5. Installation pour la réalisation en continu de coquilles ou demi-coquilles cylindriques à propriétés isolantes thermiques selon l'une des revendications 1 à 4, ***caractérisée* en ce qu'**elle comprend également en amont du poste de remplissage (10) un dispositif de positionnement (37, 40) au fond des moules femelles, d'un film ou complexe à fonction pare-vapeur (35).

6. Installation pour la réalisation en continu de coquilles ou demi-coquilles cylindriques à propriétés isolantes thermiques selon l'une des revendications 1 à 5, ***caractérisée* en ce qu'**elle comprend également en amont du poste de remplissage (10) un dispositif de positionnement d'un film anti corrosif (45) en contact avec la partie saillante cylindrique du moule mâle, ce film anti-corrosif (45) étant constitué d'une matière plastique étirable ou d'un film papier.

7. Installation pour la réalisation en continu de coquilles ou demi-coquilles cylindriques à propriétés isolantes thermiques selon l'une des revendications 1 à 6, ***caractérisée* en ce qu'**elle comprend des galets de reprise (30), montés sur un support (31) actionnable selon un mouvement vertical au moyen d'un ou de plusieurs vérins (32), destinés à prendre appui sur la face supérieure (33) des moules mâles sensiblement en position centrale par rapport aux bords latéraux desdits moules.

8. Installation pour la réalisation en continu de coquilles ou demi-coquilles cylindriques à propriétés isolantes thermiques selon l'une des revendications 1 à 7, ***caractérisée* en ce que** les empreintes des moules femelles (2) et des moules mâles (4) sont orientées perpendiculairement par rapport à la direction A de leur progression au sein de ladite installation.

9. Coquilles ou demi-coquilles (50) à propriétés isolantes thermiques, à section transversale cylindrique ou semi-cylindriques obtenue au moyen de l'installation selon l'une des revendications 1 à 8, ***caractérisées* en ce qu'**elles sont constituées d'une partie principale (47) en forme de manchon cylindrique droit, c'est-à-dire correspondant au volume compris entre les parois latérales de deux cylindres concentriques de même hauteur, ladite partie principale étant réalisée en une mousse de polyuréthane ou de polyisocyanurate, dont la face externe est revêtue d'un film ou complexe pare-vapeur (35), et donc la face interne est revêtue d'un film anti-corrosif (45).

10. Coquilles ou demi-coquilles à propriétés isolantes thermiques selon la revendication *9,* ***caractérisées* en ce que** le film ou complexe pare-vapeur (35) est réalisé à base d'un film d'aluminium.

11. Coquilles ou demi-coquilles à propriétés isolantes thermiques selon l'une des revendications 9 et 10, ***caractérisées* en ce que** le film anti-corrosif (45) est constitué d'un film plastique ou d'une feuille de papier.

## Patentansprüche

1. Anlage zur kontinuierlichen Herstellung von zylindrischen Schalen oder Halbschalen (50) mit wärmeisolierenden Eigenschaften, umfassend:
• ein lineares Doppelförderband mit diskreter Förderung in die gleiche Richtung und mit gleicher Geschwindigkeit:
▪ ein unteres Förderband (1), das eine Vielzahl von abnehmbaren Matrizenformen (2) aufnimmt;
▪ ein oberes Förderband (3), das sich direkt über dem unteren Förderband (1) befindet und eine identische Anzahl von abnehmbaren Patrizenformen (4) aufnimmt;
wobei die Matrizen- und Patrizenformen so geformt sind, dass sie in Arbeitsstellung zueinander ein halbzylindrisches Volumen (15) definieren;
wobei der Doppelförderer in der Lage ist, die Formen zwischen einer Station (10) zum Füllen des Volumens (15) mit Elementen, die geeignet sind, das Material mit wärmeisolierenden Eigenschaften der Schalen oder Halbschalen zu bilden, und einer Station (13) zum Empfang und zur Entnahme der Schalen oder Halbschalen zu bewegen;
• mindestens ein Rohr (17) oder eine Düse zum Einbringen von Bestandteilen, die miteinander interagieren können, um ein Polyurethan oder ein Polyisocyanurat zu bilden, in das so definierte Volumen (15) an der Füllstation (10).

2. Anlage zur kontinuierlichen Herstellung von zylindrischen Halbschalen oder Schalen mit wärmeisolierenden Eigenschaften nach Anspruch 1, **dadurch *gekennzeichnet,* dass** der untere (1) und der obere (3) Förderer jeweils aus zwei Bahnen bestehen, jeweils einer oberen und einer unteren Bahn, auf denen die Patrizen- bzw. Matrizenformen fortbewegt werden können, wobei die Formen auf den Bahnen insbesondere mittels eines Stellglieds in Richtung der Fortbewegung der Formen zwischen der Füllstation (10) und einer Empfangsstation (13) der Schalen oder Halbschalen und mittels einer Kette oder eines Riemens in umgekehrter Richtung angetrieben werden.

3. Anlage zur kontinuierlichen Herstellung von zylindrischen Schalen oder Halbschalen mit wärmeisolierenden Eigenschaften nach Anspruch 2, **dadurch *gekennzeichnet,* dass** die beiden Enden der beiden jeweiligen Bahnen, deren Länge mindestens gleich der der Formen ist, unter der Wirkung eines Stellglieds (18) in vertikaler Translation beweglich sind, so dass die Formen die Bahnen wechseln können.

4. Anlage zur kontinuierlichen Herstellung von zylindrischen Schalen oder Halbschalen mit wärmeisolierenden Eigenschaften nach einem der Ansprüche 2 und 3, **dadurch *gekennzeichnet,* dass** die jeweils oberen und unteren Bahnen aus zueinander parallelen Schienen (5 - 8) bestehen, auf denen die Formen fortbewegt werden, wobei letztere zu diesem Zweck mit frei drehbaren Laufrollen (9) versehen sind.

5. Anlage zur kontinuierlichen Herstellung von zylindrischen Schalen oder Halbschalen mit wärmeisolierenden Eigenschaften nach einem der Ansprüche 1 bis 4, **dadurch *gekennzeichnet,* dass** sie außerdem vor der Füllstation (10) eine Positionierungsvorrichtung (37, 40) am Boden der Matrizenformen für eine Folie oder einen Verbundstoff mit Dampfsperrfunktion (35) umfasst.

6. Anlage zur kontinuierlichen Herstellung von zylindrischen Schalen oder Halbschalen mit wärmeisolierenden Eigenschaften nach einem der Ansprüche 1 bis 5, **dadurch *gekennzeichnet,* dass** sie ebenfalls vor der Füllstation (10) eine Positionierungsvorrichtung für eine Korrosionsschutzfolie (45) in Kontakt mit dem zylindrischen Vorsprung der Patrizenform umfasst, wobei diese Korrosionsschutzfolie (45) aus einem dehnbaren Kunststoffmaterial oder einer Papierfolie besteht.

7. Anlage zur kontinuierlichen Herstellung von zylindrischen Schalen oder Halbschalen mit wärmeisolierenden Eigenschaften nach einem der Ansprüche 1 bis 6, **dadurch *gekennzeichnet,* dass** sie Aufnahmerollen (30) umfasst, die auf einem Träger (31) montiert sind, der gemäß einer vertikalen Bewegung mittels eines oder mehrerer Stellglieder (32) betätigt werden kann, und die dazu bestimmt sind, sich auf der Oberseite (33) der Patrizenformen im Wesentlichen in einer mittigen Position in Bezug auf die seitlichen Ränder der Formen abzustützen.

8. Anlage zur kontinuierlichen Herstellung von zylindrischen Schalen oder Halbschalen mit wärmeisolierenden Eigenschaften nach einem der Ansprüche 1 bis 7, **dadurch *gekennzeichnet,* dass** die Abdrücke der Matrizenformen (2) und der Patrizenformen (4) senkrecht zur Richtung A ihrer Fortbewegung innerhalb der genannten Anlage ausgerichtet sind.

9. Schalen oder Halbschalen (50) mit wärmeisolierenden Eigenschaften, mit zylindrischem oder halbzylindrischem Querschnitt, die mithilfe der Anlage nach einem der Ansprüche 1 bis 8 erhalten werden, **dadurch *gekennzeichnet,* dass** sie aus einem Hauptteil (47) in Form einer geraden zylindrischen Hülse bestehen, das heißt, die dem Volumen zwischen den Seitenwänden von zwei konzentrischen Zylindern gleicher Höhe entspricht, wobei der Hauptteil aus einem Polyurethan- oder Polyisocyanurat-Schaumstoff hergestellt ist, dessen Außenseite mit einer Folie oder einem Verbundstoff mit Dampfsperrfunktion (35) beschichtet ist und daher die Innenseite mit einer Korrosionsschutzfolie (45) beschichtet ist.

10. Schalen oder Halbschalen mit wärmeisolierenden Eigenschaften nach Anspruch 9, **dadurch *gekennzeichnet,* dass** die Folie oder der Verbundstoff mit Dampfsperrfunktion (35) aus einer Aluminiumfolie hergestellt ist.

11. Schalen oder Halbschalen mit wärmeisolierenden Eigenschaften nach einem der Ansprüche 9 und 10, **dadurch *gekennzeichnet,* dass** die Korrosionsschutzfolie (45) aus einer Kunststofffolie oder einem Papierbogen besteht.

## Claims

1. Installation for the continuous production of cylindrical shells or half-shells (50) with thermal insulating properties, comprising:
• a double linear conveyor with discrete progression respectively in the same direction and the same speed:
▪ a lower conveyor (1) receiving a plurality of removable female molds (2);
▪ an upper conveyor (3), located vertically above the lower conveyor (1), and receiving an identical quantity of removable male molds (4);
said male and female molds being shaped to define between them, in the operational position, a semi-cylindrical volume (15);
said double conveyor being able to move the moulds between a station (10) for filling said volume (15) with elements able to constitute the material with thermal insulating properties of the shells or half-shells, and a station (13) for receiving and recovering the shells or half-shells;
• at least one tube (17) or nozzle for introduction into the volume (15) thus defined at the filling station (10) of the constituents capable of interacting with each other in order to constitute a polyurethane or a polyisocyanurate.

2. Installation for the continuous production of cylindrical half-shells or shells with thermal insulating properties according to claim 1, ***characterised* in that** the lower (1) and upper (3) conveyors each consist of two tracks, an upper track and a lower track, respectively, on which the male and female moulds are capable of advancing, respectively, said moulds being driven on the tracks in particular by means of a cylinder in the direction of advance of the moulds between the filling station (10) and a station (13) for receiving the shells or half shells, and by means of a chain or a belt in the return direction.

3. Installation for the continuous production of cylindrical shells or half-shells with thermal insulating properties according to claim 2, ***characterised* in that** the two ends of the two respective tracks with a length at least equal to that of the moulds, are movable in vertical translation under the action of a jack (18), so as to allow said moulds to change tracks.

4. Installation for the continuous production of cylindrical shells or half-shells with thermal insulating properties according to any one of Claims 2 and 3, ***characterised* in that** the respectively upper and lower tracks consist of rails (5-8) parallel to one another, on which the moulds advance, the latter being provided for this purpose with rollers (9) mounted freely rotating.

5. Installation for the continuous production of cylindrical shells or half-shells with thermal insulating properties according to any one of Claims 1 to 4, ***characterised* in that** it also comprises, upstream of the filling station (10), a device (37, 40) for positioning, at the bottom of the female moulds, a film or complex with a vapour barrier function (35).

6. Installation for the continuous production of cylindrical shells or half-shells with thermal insulating properties according to any one of claims 1 to 5, ***characterised* in that** it also comprises, upstream of the filling station (10), a device for positioning an anti-corrosive film (45) in contact with the cylindrical projecting part of the male mould, this anti-corrosive film (45) consisting of a stretchable plastic material or a paper film.

7. Installation for the continuous production of cylindrical shells or half-shells with thermal insulating properties according to any one of claims 1 to 6, ***characterised* in that** it comprises take-up rollers (30), mounted on a support (31) actuatable in a vertical movement by means of one or more jacks (32), intended to bear on the upper face (33) of the male moulds substantially in a central position with respect to the lateral edges of said moulds.

8. Installation for the continuous production of cylindrical shells or half-shells with thermal insulating properties according to one of Claims 1 to 7, ***characterised* in that** the impressions of the female moulds (2) and the male moulds (4) are oriented perpendicularly with respect to the direction A of their advance within said installation.

9. Shells or half-shells (50) with thermal insulating properties, with cylindrical or semi-cylindrical cross section obtained by means of the installation according to one of claims 1 to 8, ***characterised* in that** they consist of a main part (47) in the form of a straight cylindrical sleeve, that is to say corresponding to the volume between the side walls of two concentric cylinders of the same height, said main part being made of a polyurethane or polyisocyanurate foam, the outer face of which is coated with a vapour barrier film or complex (35), and therefore the inner face is coated with an anti-corrosive film (45).

10. Shells or half-shells with thermal insulating properties according to claim 9, ***characterised* in that** the vapour barrier film or complex (35) is made from an aluminium film.

11. Shells or half-shells with thermal insulating properties according to any one of Claims 9 and 10, ***characterised* in that** the anti-corrosive film (45) consists of a plastic film or a sheet of paper.
